Europäisches Patentamt

European Patent Office

Office européen des brevets

(11) Publication number: **0 635 824 A1**

# EUROPEAN PATENT APPLICATION

(21) Application number: **94109419.5**

(51) Int. Cl.6: **G11B 5/704**

(22) Date of filing: **17.06.94**

(30) Priority: **21.06.93 JP 149264/93**

(43) Date of publication of application:
**25.01.95 Bulletin 95/04**

(84) Designated Contracting States:
**DE FR GB IT LU NL**

(71) Applicant: **DIAFOIL HOECHST CO., LTD**
**28-10, Hongo 1-chome**
**Bunkyo-ku**
**Tokyo (JP)**

(72) Inventor: **Masuda, Narihiro**
**Mitsubishijushi Kawasaki-ryo,**
**375, Kawasaki-cho**
**Nagahama-shi,**
**Shiga-ken (JP)**
Inventor: **Inagaki, Masashi**
**1813-30, Matsubara-cho,**
**Hikone-shi**
**Shiga-ken (JP)**

(74) Representative: **TER MEER - MÜLLER -**
**STEINMEISTER & PARTNER**
**Mauerkircherstrasse 45**
**D-81679 München (DE)**

(54) **Magnetic recording medium.**

(57) A magnetic recording medium comprising:

a base film comprising a polyester layer A having a thickness of 0.05 to 0.40 $\mu$m and a surface roughness $R_a^A$ of 5 to 25 nm, the layer A containing 0.4 to 10.0 wt% of particles of at least one selected from the group consisting of $\gamma$-alumina, $\delta$-alumina and $\theta$-alumina, having an average particle size of 0.01 to 0.09 $\mu$m and smaller than an thickness of the layer A, and a polyester layer B laminated on the layer A by coextrusion; and

a magnetic layer disposed so as to place the polyester layer B between the polyester layer A and the magnetic layer.

EP 0 635 824 A1

BACKGROUND OF THE INVENTION

The present invention relates to a magnetic recording medium having excellent running stability, signal recording property and applicability to high-speed dubbing.

Recording onto a VTR tape has been mostly carried out in a video tape recorder. For example, a TV program is videotaped by a home VTR tape deck, or a person, scene, or the like is videotaped by a handy VTR camera. The tape speed in recording (same as in playback) has been 3.335 cm/sec in the case of VHS system and 1.4345 cm/sec in the case of 8 mm video system, and even during high-speed searching (quick feed or rewind in the playback mode), the tape speed has been not more than several times the normal speed.

In recent years, owing to a reduction in price of the recorded video tapes, it has become popular to record by using a high-speed dubbing (duplicating) machine. The following two systems of high-speed dubbing are currently used: thermomagnetic transfer recording system using laser light, and system in which the magnetic field is inverted by applying a biased magnetic field. It is common to both systems, that the tape speed is as high as 4 to 5 m/sec, which is more than 100 times the tape speed in the ordinary home VTR tape deck. This enabled a notable reduction in price of recorded video tapes as compared with the case where equal-speed dubbing is conducted.

The VTR tape used here, after recorded with a high-speed dubbing machine, is played back repeatedly by an ordinary home VTR tape deck, so that the VTR tape is required to have high quality equal to a large-screen TV display. The VTR tapes of the conventional design, although having good properties for repetitive recording and playback by a home VTR tape deck, are liable to increase of dropout due to chipping of the tape in recording by a high-speed dubbing machine, resulting in a serious problem on practical use of these tapes. Its cause is not definitely known, but difference in mechanism of chipping depending on the tape speed is supposed. Various methods have been proposed for the improvement in this respect, but it has been unable to provide a VTR tape which can meet both requirements for high chipping resistance when the VTR tape is used for a high-speed dubbing machine, and high-quality regeneration of the record by a home VTR tape deck.

As a result of the present inventors' studies for solving the above problems, it has been found that by using as a surface layer of a coextruded base film, a polyester layer having a thickness of 0.05 to 0.40 $\mu$m and a surface roughness of 5 to 25 nm, and containing 0.4 to 10.0 wt% of the particles of $\gamma$-alumina, $\delta$-alumina, $\theta$-alumina or a mixture thereof having an average primary particle size of 0.001 to 0.09 $\mu$m and smaller than the thickness of the polyester layer, there can be obtained a magnetic recording medium having excellent signal recording property and running stability and also minimized in increase of dropout due to chipping of the tape during high-speed dubbing. The present invention has attained based on this finding.

SUMMARY OF THE INVENTION

The object of the present invention is to provide a magnetic recording medium having excellent running stability, signal recording property and applicability to high-speed dubbing.

To accomplish the aim, in an aspect of the present invention, there is provided a magnetic recording medium comprising a base film comprising a polyester layer A having a thickness of 0.05 to 0.40 $\mu$m and a surface roughness $R_a^A$ of 5 to 25 nm, the layer A containing 0.4 to 10.0 wt% of particles of at least one selected from the group consisting of $\gamma$-alumina, $\delta$-alumina and $\theta$-alumina, having an average particle size of 0.01 to 0.09 $\mu$m and smaller than an thickness of the layer A, and a polyester layer B laminated on the layer A by coextrusion; and a magnetic layer disposed so as to place the polyester layer B between the polyester layer A and the magnetic layer.

DETAILED DESCRIPTION OF THE INVENTION

The magnetic recording medium according to the present invention is composed essentially of a coextruded polyester film as the base film and a magnetic layer disposed on one side thereof. The coextruded polyester film (the base film) comprises a layer (layer A) constituting the surface of the base film on the side opposite to the magnetic layer and another layer (layer B) disposed adjacently to the layer A. The layers A and B are laminated by coextrusion. The coextruded polyester film (base film) may be a laminate of A/B, or a laminate of A/B/A in which layers of the same composition as the layer A constitute both surfaces thereof. The layer B itself may be a laminate having two or more layers. In the case of the A/B laminate, the magnetic layer is disposed on the exposed surface of the layer B side.

The polyester composing both layers A and B is preferably polyethylene terephthalate or polyethylene naphthalate, but it may be a polyester obtainable by copolymerizing the third component such as terephthalic acid, isophthalic acid, 2,6-naphthalenedicarboxylic acid, 2,7-naphthalenedicarboxylic acid, biphenyldicarboxylic acid, triethylene glycol, diethylene glycol, cyclohexane dimethanol, p-hydroxybenzoic acid or the like with the major dicarboxylic acid component and the major diol component, provided that the content of the third-component is less than 5 mol% of the components of the polyester.

The layer A of the base film of the magnetic recording medium of the present invention has a thickness of 0.05 to 0.40 $\mu$m. If the thickness of the layer A is less than 0.05 $\mu$m, the obtained recording medium tends to deteriorate in applicability to high-speed dubbing, and a dropout rate tends to increase. If the thickness exceeds 0.40 $\mu$m, running stability required for a VTR tape tends to become insufficient. Especially, the thickness of 0.10 to 0.30 $\mu$m provides a good balance between high-speed dubbing performance and running stability.

It is preferably that the layer A contains substantially no particle having a size (diameter) of not less than 0.1 $\mu$m. The expression "contain substantially no particle" used herein means that the content of the particles is usually not more than 0.1 wt% preferably not more than 0.05 wt%, more preferably 0 wt%. If the layer A contains substantially the particles having a size of not less than 0.1 $\mu$m, chipping of the film surface may increase especially during high-speed dubbing.

The layer A contains particles of at least one selected from $\gamma$-alumina, $\delta$-alumina, and $\theta$-alumina. The particles have an average primary particle size of 0.001 to 0.09 $\mu$m and smaller than the thickness of the layer A. Use of $\alpha$-alumina can not provide a satisfactory preventing effect from chipping of the tape during high-speed dubbing. Even when using $\gamma$-alumina, $\delta$-alumina, and $\theta$-alumina, if its average primary particle size exceeds 0.09 $\mu$m, the preventing effect from tape chipping during high-speed dubbing is still unsatisfactory.

Alumina particles normally exist in the form of agglomerates, but these agglomerates are properly broken up to a favorable dispersed state in course of film production. However, alumina particles whose average primary particle size is less than 0.001 $\mu$m usually form the very solid agglomerates which are not broken up during melt extrusion or stretching, so that these alumina particles are unfavorable for use in the present invention. In the present invention, when the particles of 0.03 to 0.09 $\mu$m of $\gamma$-alumina or $\delta$-alumina or a mixture thereof are used, the maximal preventing effect from tape chipping during high-speed dubbing is provided. When the average primary particle size of alumina particles is greater than the thickness of the layer A, there may take place fall-off of the particles, even if the average primary particle size is within the above-defined range, so that use of the alumina particles having the size greater than the thickness of the layer A is unfavorable in the present invention.

The alumina particle content in the layer A is 0.4 to 10.0 wt%. It is known that scuffs of the film surface or generation of wear dust can be minimized by adding alumina particles to the polyester film (see, for instance, Japanese Patent Application Laid-Open Nos. 1-306220 (1989) and 3-1941 (1991)). A satisfactory preventing effect was provided by the addition of alumina particles in an amount of about 0.2 to 0.3 wt% in case of a single-layered film or even in case of a laminated film if the layer corresponding to the layer A is relatively thick (such as about 5 $\mu$m), but it has been found that addition of alumina particles in an amount less than 0.4 wt% is almost ineffective in case the thickness of the layer A is very thin, such as about 0.05 to 0.40 $\mu$m as in the present invention. In the present invention, in order to prevent or minimize chipping of the tape during high-speed dubbing, the content of alumina particles in the layer A is 0.4 to 10.0 wt%, preferably 0.6 to 7.0 wt%, more preferably 0.8 to 5.0 wt%. When the alumina content exceeds 10.0 wt%, fall-off of the alumina particles may be take place.

It is usually to form fine projections on the surface of the layer A for providing a satisfactory running quality of a VTR tape, and such projections are preferably formed by the inert particles present in the layer B. The inert particles in the layer B may be those commonly used for base films. The term "inert" means that the particles do not chemically react nor decompose under usual conditions of the production of the magnetic recording medium. Preferred examples are particles of calcium carbonate, calcium phosphate, barium sulfate, titanium oxide, kaolin, talc, silica, carbon black, crosslinked organic particles such as crosslinked polystyrene resin particles and crosslinked acrylic resin particles. Mono-disperse, spherical or spheroidal particles are preferred as these particles can provide better running stability and signal recording property. The average particle size (diameter) of these inert particles is usually 0.1 to 2.5 $\mu$m, preferably 0.2 to 2.0 $\mu$m, and the amount thereof added is usually 0.05 to 2.0 wt%, preferably 0.1 to 1.5 wt%. In case of using the particles with relatively small sizes such as particles having the size of 0.1 to 0.5 $\mu$m, it is preferable to jointly use also the relatively large-sized particles, such as particles having the size of 0.5 to 2.5 $\mu$m, in a ratio by weight of 1/20 to 1/4 to the small-sized particles. The use of both is advantageous both for providing good signal recording property and for preventing disorderly winding of the magnetic tape during high-speed dubbing. The thickness of the layer B is usually 5 to 15 $\mu$m.

The surface roughness $R_a^A$ of the layer A of the base film according to the present invention is 5 to 25 nm. When $R_a^A$ is less than 5 nm, the obtained magnetic tape proves unsatisfactory in running property such as running stability. When $R_a^A$ is greater than 25 nm, although the running property is improved, surface roughness of the layer A is transferred to the surface of the magnetic layer to deteriorate its signal recording property. The especially preferred range of $R_a^A$ for a VTR tape is 7 to 20 nm.

In case the base film is composed of an A/B laminated structure with the layer B being a single layer, the surface roughness of the layer B ($R_a^B$) becomes slightly greater than that of the layer A ($R_a^A$). It is preferable to set the layer A thickness within the above-defined range so that the roughness ratio of the layer B to the layer A ($R_a^B/R_a^A$) be 1.0 to 1.2.

On the side of the base film where the magnetic layer is to be provided, an undercoat may be provided for improving adhesion to the magnetic layer. It is recommended to form the undercoat by the in-line coating in which a water dispersion of a polymer such as polyurethane, polyester, acryl or the like is coated on a polyester film which has already been stretched in the machine direction, and the coated polyester film is then stretched transversely and heat-set by a tenter for accomplishing thinning of the film, drying and heat-curing at the same time.

The principal magnetic substance constituting the magnetic layer used in the magnetic recording medium of the present invention is usually Co-containing $\gamma$-iron oxide or metallic iron, and such iron preferably stays dispersed in the resin binder of the magnetic layer. The composition of the resin binder, its coating method and the calendering method may be the known ones.

In case the base film has the A/B laminated structure with the layer B being a single layer, it is preferable that the difference between the thickness of the base film and the overall thickness of the magnetic recording medium including the magnetic layer is 2 to 7 $\mu$m, more preferably 3 to 6 $\mu$m. This difference usually represents the thickness of the magnetic layer. In case a non-magnetic layer is coated beneath the magnetic layer, followed by calendering, the difference signifies the total thickness of the magnetic layer and the non-magnetic (undercoat) layer.

An example of the process for producing a polyester film used as the base film in the present invention is described below.

A resin for forming the layer A and a resin for forming the layer B are dried separately as required and then extruded from different extruders, and the extrudates are laminated at a section before the die-head by a feedblock type coextruder or laminated in the die-head by a multi-manifold type coextruder, followed by melt extrusion into a sheet and cooling and solidifying on a casting drum to form an amorphous film. An electrostatic pinning method is preferably employed in carrying out cooling and solidification because flatness of the base film is improved. It is also preferable to provide a #1,200-mesh or smaller mesh-sized filter in the extruder for forming the layer A and a #600-mesh or smaller mesh-sized filter in the extruder for forming the layer B and to carry out extrusion through these filters, because coarse projections are reduced to decrease the dropout rate. It is further preferable to provide a static mixer and a metering pump in each melt line because uniformity of film or film thickness is improved.

The thus obtained amorphous film is biaxially stretched to have it biaxially oriented. Stretching is preferably carried out by the successive stretching method in which the film is first stretched in the machine direction and then stretched in the transverse direction. The temperature and stretch ratio for stretching in the machine direction are properly selected from the ranges of 50 to 180°C and 2.0 to 9.0 times, respectively, in consideration of the polyester composition. The stretching may be carried out in a single stage, but it is preferable to carry out stretching in two or more stages under the conditions of the stretching temperature and stretch ratio in the above-mentioned ranges, because the alumina particles in the layer A can be broken into a better dispersed state. The same or different stretching temperature may be employed for each stage. The stretching rate in the machine direction is preferably 5,000 to 70,000%/min for improving uniformity of film thickness. Above-mentioned in-line coating may be conducted at this stage.

Tentering is preferably employed for stretching in the transverse direction. The transverse stretching is preferably carried out at a temperature in the range of 80 to 170°C for a stretch ratio of 3.0 to 6.0 times at a stretching rate of 100 to 20,000%/min.

If necessary, the film may be restretched. Restretching may be performed in the machine or transverse direction, or in both directions, at a temperature of 100 to 220°C for a stretch ratio of 1.05 to 1.50.

The stretched film is then heat-set. Heat setting is conducted at a temperature of usually 170 to 250°C, preferably 180 to 230°C, for a period of preferably 1 to 60 seconds.

The magnetic recording medium according to the present invention exhibits excellent signal recording property and running stability in use as a VTR tape and is minimized in increase of dropout due to chipping of tape during high-speed dubbing at a tape speed of not less than 4 m/sec. Therefore, the recording medium is very useful not only to ordinary VTR cassettes but also to pancake (raw roll) for software duplicating involving high-speed dubbing.

EXAMPLES

The present invention is further illustrated below with reference to the examples. These examples, however, are merely intended to be illustrative and not to be construed as limiting the scope of the invention. "%" and "part" are by weight, unless otherwise noted.

The following methods were employed for determining the film properties shown in the Examples and Comparative Examples.

1. Surface roughness (center-line average roughness Ra and 10-point average roughness Rz)

Measured according to JIS B0601-1976 using a surface roughness tester SE-3F manufactured by Kosaka Kenkyusho Co., Ltd. The center-line average roughness and 10-point average roughness were measured under the following conditions: stylus diameter = 2 $\mu$m; stylus load = 30 mg; cutoff value = 0.08 mm; measuring length = 2.5 mm. Measurement was made at 12 points and the maximal and minimal values were eliminated. The average of the remaining 10 measurements was calculated and shown as Ra (center-line average roughness) and Rz (10-point average roughness), respectively.

2. Average article size (diameter)

The surface of the layer A was etched by using a plasma etching machine (Plasma Reactor PR-41 manufactured by Yamato Kagaku KK) under an argon atmosphere to expose the particles in the layer A. The etched film was observed under a scanning electron microscope and photographed at a magnification of 30,000, and the primary particle diameters of the particles present therein were measured by randomly selecting 100 particles and the average of 100 measurements was calculated and expressed as the average particle size.

3. Thicknesses of lamination layers

Each sample film was embedded in a resin so that the film section in the thickness direction could be observed. A 100 nm thick piece was cut out by using a microtome and observed under a transmission electron microscope H-9000 of Hitachi Ltd. to determine the thicknesses of the lamination layers (magnification: 10,000-20,000; acceleration voltage: 100 kV). The boundary between the layer A and the layer B could be judged according to the presence or absence of alumina particles.

4. Dynamic coefficient of friction ($\mu$m) with metal pin

Each sample VTR tape was passed round a fixed hard chrome-plated metal pin (diameter: 6 mm, surface roughness: 0.2 S) at a cotact angle of 135° ($\theta$), and with a load of 53 g ($T_2$) applied to one end, the tape was let run at a speed of 1 m/min. The resistance ($T_1$, g) at the other end was measured and the coefficient of friction ($\mu$d) in the tape run was determined from the following equation:

$\mu d = (1/\theta) \times \ln (T_1/T_2) = 0.424 \ln (T_1 \times 53)$

5. Scuff resistance

The non-magnetic layer side (A side) of each test VTR tape was set in contact with a fixed hard chrome-plated metal pin (diameter: 6 mm, surface roughness: 0.2 S) and passed round the pin one time under a tension of 50 g at a contact angle of 135° and a tape speed of 4 m/sec. Aluminum was deposited to a thickness of 1000 Å on the pin-contacted side of the test tape and the degree of scuff was visually judged and ranked as follows:

    1: The degree of scuff is extreme.
    2: The degree of scuff is high.
    3: The degree of scuff is intermediate between 2 and 4.
    4: The degree of scuff is slight.
    5: The tape has no scuff.

5

## 6. Signal recording property

For evaluating the signal recording property, C-S/N of the tape was measured by using a VTR deck (NV-8200 manufactured by Matsushita Electric Industrial Co., Ltd.) and a color video noise meter (Model 925C manufactured by Shibasoku KK). The value obtained in Example 1 was supposed to be 0.0 dB and the values obtained in other examples were expressed as relative values (dB) thereto.

## 7. Dropout after high-speed dubbing (duplicating)

A video pancake (raw roll) was set in a high-speed dubbing machine (HSP5000C manufactured by Sony Corp.) with a mirror mother tape on which inverted test signal is recorded so that the magnetic layers thereof faced each other, and high-speed dubbing was carried out at a tape speed of 4.5 m/sec. This tape was cut to a length of 250 m and loaded in a cassette.

Dropout of this VTR tape was measured by using a VTR deck (NV-8200 manufactured by Matsushita Electric Industrial Co., Ltd.) and a dropout counter (IDC2 manufactured by Ohkura Industry Co., Ltd.). Measurement was conducted for a period of about 20 minutes, and the obtained value was reduced to a dropout count per minute and expressed as a ratio to the value of Example 1 which was supposed to be 1.

## Examples 1 to 4 and Comparative Examples 1 to 2

⟨Production of polyester film⟩

100 parts of dimethyl terephthalate, 65 parts of ethylene glycol and 0.09 parts of magnesium acetate were heated gradually in a reactor to perform an ester exchange reaction while evaporating away methanol. The temperature was raised to 230°C by spending about 4 hours after start of the reaction to substantially complete the ester exchange reaction. Then, the particles shown in Table 1 were respectively added as ethylene glycol slurry, followed by further addition of 0.4 parts of ethyl acid phosphate and 0.04 parts of antimony trioxide, and then the pressure in the reaction system was gradually reduced from normal pressure till reaching 1 mmHg. 4 hours later, normal pressure was restored in the reaction system to obtain polyester (resin) with an intrinsic viscosity of 0.62. The resin with each combination shown in Table 1, was separately dried at 180°C for 4 hours, supplied into a two-layer coextruder and subjected to melt extrusion at 290°C. In this operation, filtration was conducted by using a #2,000-mesh filter for the layer A and a #1,200-mesh filter for the layer B, and the two layers were joined and laminated by a feedblock. The laminate was extruded into a sheet from the diehead and cooled and solidified on a 30°C casting roll by using an electrostatic pinning method to obtain a two-layer structured amorphous sheet. The discharge rate of the extruder was adjusted so that the layer A would have the thickness shown in Table 1.

The amorphous sheet was stretched 2.4 times in the machine direction at 85°C and then further stretched 1.3 times at 92°C by roll stretching. Then, a coating solution prepared by dispersing sulfonylisophthalic acid-modified polyethylene terephthalate in water was coated on the layer B side of the film so that the dry thickness of the film after biaxial stretching became 0.05 $\mu$m.

Then the film was led to a tenter, stretched 3.8 times in the transverse direction at 110°C and heat set at 215°C for 15 seconds to obtain a biaxially oriented film with an overall thickness of 15 $\mu$m.

⟨Production of VTR tape⟩

A magnetic coating of the following composition was mixed and dispersed by a ball mill for 24 hours and then coated on the B side of the film by a gravure roll coater.

| Co-containing iron oxide (BET 50 m$^2$/g) | 100 parts |
| Polyurethane | 10 parts |
| Nitrocellulose | 5 parts |
| Vinyl chloride-vinyl acetate copolymer | 10 parts |
| Lecithin | 2 parts |
| Polyisocyanate | 5 parts |
| Carbon black | 2 parts |
| Methyl ethyl ketone | 75 parts |
| Methyl butyl ketone | 75 parts |
| Toluene | 75 parts |

The coat, before well dried and solidified, was magnetically oriented and then dried to form a magnetic layer. This coated film was subjected to 5-stage super calendering at 70°C under a linear pressure of 200 kg/cm, then wound up and cured at 70°C for 48 hours. The thickness of the magnetic layer of the obtained film was 5 $\mu$m. The film was slit to a 1/2 inch width and cut to a length of 5,000 meters, then wound up on a reel and set in a video pancake. Also, the film was cut to a length of 250 meters and incorporated in a case to prepare a VTR cassette.

Example 5

A resin for the layer A and two kinds of resins for the layer B shown in Table 1 were prepared in accordance with Example 1. These resins were dried in the same way as Example 1, then supplied to a three-layer coextruder, fused at 290°C and cast onto a 30°C cooling drum to obtain a three-layer structured amorphous film. The film was subjected to stretching in the machine direction, in-line coating, stretching in the transverse direction and heat setting in the same way as Example 1 to obtain a biaxially oriented polyester film having an overall thickness of 15 $\mu$m. The thickness of the layer A was 0.2 $\mu$m, the thickness of the inner portion of the layer B was 7.3 $\mu$m and the thickness of the outer portion (the portion constituting the layer B surface) of the layer B was 7.5 $\mu$m.

On the layer B side of the film, a magnetic layer was provided in the same way as Example 1.

Comparative Example 3

A resin for layer A and two kinds of resins for layer B shown in Table 2 were prepared in accordance with Example 1. These resins were dried in the same way as Example 1, then supplied to a three-layer coextruder, fused at 290°C and cast onto a 30°C cooling drum to obtain a 200 $\mu$m thick amorphous film. The film was heated by the 75°C rolls and an infrared heater with a surface temperature of 600°C (set at a distance of 20 mm from the film) and stretched 3.3 times in the machine direction while passing between the low-speed roll and the high-speed roll. This film was led into a tenter, thereby stretched 4.4 times in the transverse direction at 100°C and then heat set at 220°C for 5 seconds to make a biaxially oriented polyester film having an overall thickness of 15 $\mu$m. The thickness of the layer A was 0.7 $\mu$m, the thickness of the inner portion of the layer B was 1.5 $\mu$m and the thickness of the outer portion (the portion constituting the layer B surface) of the layer B was 12.8 $\mu$m.

A magnetic layer was provided on the layer B side of the film in the same way as Example 1.

Comparative Example 4

A resin containing both spherical silica and alumina as shown in Table 2 was prepared in accordance with Example 1. This resin was dried in the same way as Example 1, supplied into a single-layer coextruder and subjected to the otherwise same treatments as Example 1 to obtain a biaxially oriented film having an overall thickness of 15 $\mu$m.

A magnetic layer was provided on one side of this film in the same way as Example 1.

Table 1

| | | Example 1 | Example 2 | Example 3 | Example 4 | Example 5 |
|---|---|---|---|---|---|---|
| Layer A | Type of particle | δ-alumina | δ-alumina | δ-alumina | δ-alumina | δ-alumina |
| | Primary particle size ($\mu$m) | 0.05 | 0.05 | 0.05 | 0.05 | 0.05 |
| | Amount of particles (%) | 2.00 | 2.00 | 2.00 | 1.00 | 2.00 |
| Layer B | Type of particle | Spherical silica | Crosslinked polystyrene particles | Calcium carbonte *1 | Spherical silica | 2-layer film *2 |
| | Particle size ($\mu$m) | 0.70 | 0.40 | 0.40 | 0.70 | |
| | Amount of particles (%) | 0.30 | 0.20 | 0.60 | 0.30 | |
| Thickness of layer A ($\mu$m) | | 0.15 | 0.15 | 0.15 | 0.35 | 0.20 |
| Ra of layer A surface (nm) | | 18 | 16 | 17 | 15 | 16 |
| Rz of layer A surface (nm) | | 310 | 245 | 205 | 290 | 230 |
| Metallic pin friction coefficient | | 0.19 | 0.23 | 0.20 | 0.30 | 0.19 |
| Scuff resistance | | 5 | 5 | 5 | 4 | 5 |
| Signal recording property (dB) | | ±0.0 | +0.7 | +1.5 | +0.6 | +1.8 |
| Dropout count after high-speed dubbing | | 1.0 | 1.0 | 1.0 | 1.3 | 1.0 |

*1: Also containing 0.04% of calcium carbonate having particle size of 0.80 $\mu$m.

*2: Inner portion of layer B: containing 0.30% of calcium carbonate (particle size: 0.40 $\mu$m) and 0.15% of spherical monodisperse organic particles (particle size: 0.40 $\mu$m) and having a thickness of 7.3 $\mu$m.

Outer portion of layer B: containing 0.15% of calcium carbonate (particle size: 0.40 $\mu$m) and 0.07% of spherical monodisperse organic particles (particle size: 0.40 $\mu$m) and having a thickness of 7.5 $\mu$m.

EP 0 635 824 A1

Table 2

|  |  | Comparative Example 1 | Comparative Example 2 | Comparative Example 3 | Comparative Example 4 |
|---|---|---|---|---|---|
| Layer A | Type of particle | Spherical silica | δ-alumina | γ-alumina | <Single layer> Spherical silica (particle size: 0.70 μm, amount: 0.30 %) and δ-alumina (particle size: 0.05 μm, amount: 0.30 %) |
|  | Primary particle size (μm) | 0.2 | 0.05 | 0.02 |  |
|  | Amount of particles (%) | 4.00 | 2.00 | 0.20 |  |
| Layer B | Type of particle | Spherical silica | Calcium carbonte | 2-layer film *3 |  |
|  | Particle size (μm) | 0.20 | 1.10 |  |  |
|  | Amount of particles (%) | 0.20 | 0.40 |  |  |
| Thickness of layer A (μm) |  | 0.15 | 0.15 | 0.70 | <Single layer> |
| Ra of layer A surface (nm) |  | 18 | 35 | 19 | 19 |
| Rz of layer A surface (nm) |  | 240 | 405 | 305 | 325 |
| Metallic pin friction coefficient |  | 0.19 | 0.15 | 0.18 | 0.18 |
| Scuff resistance |  | 1 | 5 | 2 | 4 |
| Signal recording property (dB) |  | +4.9 | -3.3 | +1.3 | -0.2 |
| Dropout count after high-speed dubbing |  | 6.5 | 1.0 | 2.5 | 2.5 |

*3: Inner portion of layer B: containing calcium carbonate (particle size: 0.60 μm; amount of particles: 0.30%) and having a thickness of 1.5 μm;
Outer portion of layer B: containing spherical silica amount of particles: 0.15%) and having a thickness of 12.8 μm.

As is seen from Tables 1 and 2, the magnetic recording media of Examples 1 to 5 according to the present invention are excellent in both signal recording property and running quality and also low in dropout count after high-speed dubbing. On the other hand, the medium of Comparative Example 1 using the particles with a size greater than 0.1 μm and not using alumina for the layer A is susceptible to scuffing on the surface during running and very high in dropout count after high-speed dubbing. It is also noted that in case the alumina content of the layer A is low, the medium is susceptible to scuffing and high in dropout count even if the other requirements are met as the medium of Comparative Example 3. In the case of a single-layer film as in Comparative Example 4, although the medium is fairly resistant to scuffing even if the alumina content is relatively small, the dropout count is high due to fall-off of the particles and/or other reasons. In Comparative Example 2, although the layer A itself meets the structural requirements of the present invention, the signal recording property is unsatisfactory due to high roughness of the layer A surface.

**Claims**

1.  A magnetic recording medium comprising:

    a base film comprising a polyester layer A having a thickness of 0.05 to 0.40 $\mu$m and a surface roughness $R_a^A$ of 5 to 25 nm, the layer A containing 0.4 to 10.0 wt% of particles of at least one selected from the group consisting of $\gamma$-alumina, $\delta$-alumina and $\theta$-alumina, having an average particle size of 0.01 to 0.09 $\mu$m and smaller than an thickness of the layer A, and a polyester layer B laminated on the layer A by coextrusion; and

    a magnetic layer disposed so as to place the polyester layer B between the polyester layer A and the magnetic layer.

2.  A magnetic recording medium according to claim 1, wherein the amount of the particles having a size of not less than 0.1 $\mu$m in the polyester layer A is not more than 0.1 wt%.

3.  A magnetic recording medium according to claim 1, wherein the polyester layer B contains 0.05 to 2.0 wt% of inert particles having an average particle size of 0.1 to 2.5 $\mu$m.

4.  A magnetic recording medium according to claim 3, wherein the inert particles are a mixture of the inert particles (a) having an average particle size of 0.1 to 0.5 $\mu$m and the inert particles (b) having an average particle size of 0.6 to 2.5 $\mu$m, and the ratio by weight of the inert particles (b) to the inert particles (a) is 1:20 to 1:4.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 541 072 (DIAFOIL HOECHST CO. LTD.) 12 May 1993 <br> * page 1, paragraph 1 * <br> * page 2, line 45 - page 3, line 2 * <br> * page 3, line 56 - page 4, line 2 * <br> * page 8; example 1 * <br> --- | 1-4 | G11B5/704 |
| A | EP-A-0 530 774 (DIAFOIL HOECHST CO. LTD.) 10 March 1993 <br> * page 2, paragraph 1 * <br> * page 2, line 43 - page 6, line 3 * <br> * page 8; claim 1; example 1 * <br> ----- | 1-4 | |
| | | | TECHNICAL FIELDS SEARCHED (Int.Cl.5) <br><br> G11B |

The present search report has been drawn up for all claims

| Place of search | Date of completion of the search | Examiner |
|---|---|---|
| THE HAGUE | 15 November 1994 | Klocke, S |

EPO FORM 1503 03.82 (P04C01)